# FASCICULE DE BREVET EUROPEEN

(11) **EP 0 833 076 B1**
(45) Date de publication et mention de la délivrance du brevet: **29.08.2001**
(21) Numéro de dépôt: 97116951.1
(22) Date de dépôt: 30.09.1997
(51) Int. Cl.: F16F 15/131, F16F 15/139

(54) **Double volant à roulement à billes, notamment pour véhicule automobile**
Zweimassenschwungrad mit Rollenlagerung, insbesondere für Kraftfahrzeuge
Double mass flywheel having roller bearing support,in particular for motor vehicles

(30) Priorité: 30.09.1996 FR 9612098
(43) Date de publication de la demande: 01.04.1998
(73) Titulaire: VALEO, 75017 Paris (FR)
(72) Inventeur: Bertin, Patrice, 95540 Mery Sur Oise (FR); Soares, Cesario, 28300 Fresnay Le Gilmert (FR)
(74) Mandataire: Gamonal, Didier

(56) Documents cités:
- WO-A-96/10139
- DE-U- 9 116 571
- GB-A- 1 563 924
- US-A- 4 550 237
- PATENT ABSTRACTS OF JAPAN vol. 006, no. 080 (M-129), 19 mai 1982 & JP 57 018816 A (TOSHIBA CORP), 30 janvier 1982,

## Description

La présente invention se rapporte à un double-volant, notamment pour véhicule automobile, comportant deux masses tournantes coaxiales montées mobiles en rotation l'une par rapport à l'autre autour d'un axe commun de symétrie axiale avec intervention de moyens d'accouplement entre les deux masses.

L'une des masses, dite première masse, est destinée à être liée en rotation à un arbre menant, tandis que l'autre des masses, dite seconde masse, comporte un plateau formant le plateau de réaction d'un embrayage à friction, en sorte que la seconde masse est destinée à être liée en rotation de manière débrayable à un arbre mené.

La seconde masse est montée rotative sur la première masse par l'intermédiaire d'un roulement à billes intervenant entre la périphérie externe d'un appendice axial épaulé porté par l'une des masses et la périphérie interne, en forme d'alésage interne épaulé, de l'autre masse.

Le roulement à billes intervient entre les parties centrales (ou internes) des deux masses.

L'appendice pénètre au moins partiellement à l'intérieur de l'alésage interne en étant entouré par la bague interne du roulement à billes.

Dans un sens axial les bagues du roulement sont calées par les épaulements de l'appendice et de l'alésage interne.

Dans l'autre sens axial, il faut prévoir des pièces supplémentaires, par exemple des circlips engagés dans des gorges, pour caler les bagues du roulement.

Un tel double-volant est décrit dans les documents FR-A-2 662 760, FR-A-2 554 891 et FR-A-2 044 978.

Ainsi les moyens d'accouplement peuvent être du type centrifuge (FR-A-2 044 978) ou du type moyens élastiques d'amortissement (FR-A-2 662 760 et FR-A-2 554 891).

Il en résulte que l'appendice et l'alésage interne ont une longueur supérieure à celle de la bague associée du roulement, ce qui est de nature à augmenter l'encombrement axial au centre du double-volant et accroît la consommation de matière.

En outre, il faut prévoir des pièces supplémentaires pour caler axialement le roulement et usiner l'alésage interne et l'appendice pour montage des bagues du roulement, ce qui augmente le coût du double-volant.

De plus, cela augmente l'encombrement radial au centre du double-volant car, pour des raisons de résistance mécanique, il faut qu'il y ait suffisamment de matière autour des bagues de roulement.

D'une manière générale, il est souhaitable de ne pas modifier de manière profonde le roulement, car celui-ci intervient de manière importante dans le coût du double-volant.

Pour des raisons de robustesse et de durée de vie du double-volant, il est également souhaitable d'augmenter légèrement l'épaisseur des bagues du roulement.

La présente invention a pour objet, de manière simple et économique, de pallier à ces inconvénients et de répondre à ces souhaits.

C'est donc un but de l'invention de réduire le nombre de pièce du double-volant et de simplifier au moins l'une des masses, tout en faisant appel à un roulement de forme simple.

C'est encore un but de l'invention de réduire les coûts d'usinage ainsi que l'encombrement au centre du double-volant, tout en ayant un roulement robuste.

Suivant l'invention, un double-volant du type susindiqué est caractérisé en ce que l'une au moins des bagues du roulement est solidarisée par soudage à sa masse associée et en ce que le soudage intervient entre une face transversale de ladite masse et la face transversale en vis-à-vis de ladite bague.

Avantageusement, pour ménager les pièces du double-volant ainsi que pour des raisons de simplicité et de rapidité, le soudage est réalisé sans apport de matière par décharge rapide d'un condensateur avec mise en contact sous pression des faces transversales à souder.

Grâce à l'invention, le roulement est soudé directement à l'une au moins des masses, il a une forme simple et économique, et la masse concernée par le soudage est simplifiée.

En effet, le roulement peut être du type standard et consister notamment en un roulement à billes à bagues massives, tandis que la masse concernée est dépourvue d'appendice ou d'alésage interne, ce qui permet de gagner de la matière et de supprimer des usinages coûteux.

Cette absence de matière au niveau de la périphérie respectivement interne ou externe et au-delà de l'autre face transversale de la bague à souder du roulement permet, d'une part, de réduire l'encombrement axial et radial au centre du double-volant et, d'autre part, de rendre plus robuste la masse concernée.

Cela permet également de supprimer les gorges et les circlips de calage axial des bagues du roulement, puisque le soudage permet de solidariser la bague concernée du roulement à sa masse associée. La ventilation du roulement est favorisée.

On réduit donc le nombre de pièces du double-volant et encore les usinages.

Si besoin est, on peut même augmenter légèrement l'épaisseur de la ou des bagues du roulement sans augmenter l'encombrement radial au centre du double-volant.

En effet, grâce à l'absence de matière précitée on peut augmenter légèrement la taille d'au moins une bague du roulement pour accroître sa robustesse et augmenter la durée de vie du double-volant.

Par exemple, si l'on soude la bague interne du roulement sur la première masse, on peut supprimer, au niveau du roulement, l'appendice, ce qui permet de gagner de l'épaisseur, de rapprocher le roulement vers le centre du double-volant et de réduire la taille du roulement ainsi que son coût.

Ce gain d'épaisseur permet d'augmenter légèrement l'épaisseur, par exemple de la bague interne du roulement, de manière moindre que le gain d'épaisseur, tout en rapprochant le roulement vers le centre du double-volant et donc en réduisant la taille du roulement tout en augmentant sa robustesse.

En variante on peut souder les deux bagues du roulement respectivement à la première et à la seconde masse.

Cette disposition permet encore de réduire l'encombrement axial et radial au centre du double-volant, de simplifier les deux masses et d'accroître leur robustesse tout en faisant appel à un roulement de forme simple, économique et formant entretoise axiale entre les deux masses.

On réduit encore le nombre de pièces et les usinages, et donc les coûts.

D'une manière générale, dans tous les cas on peut profiter du gain axial pour implanter un dispositif de frottement à action axiale comportant au moins une rondelle d'application calée en rotation avec mobilité axiale sur l'une des masses et une rondelle de frottement interposée axialement entre la rondelle d'application et la face transversale de la bague du roulement opposée à l'autre face transversale de ladite bague soudée sur l'autre masse.

Grâce au gain d'encombrement, dans le cas d'un double-volant à moyens élastiques d'amortissement agissant globalement radialement, il est possible d'allonger radialement lesdits moyens élastiques et d'augmenter le débattement angulaire relatif entre les deux masses.

Selon une autre caractéristique, la face transversale de la masse a une hauteur inférieure à la hauteur de la face transversale en vis-à-vis de la bague à souder.

Cette face transversale appartient, par exemple, à l'extrémité libre d'une collerette d'orientation axiale et d'épaisseur inférieure à la hauteur de la face transversale à souder de la bague du roulement.

Ainsi, lors du soudage par décharge du condensateur et mise sous pression, cela favorise l'écrasement de matière et le chauffage rapide de ladite collerette.

Avantageusement, l'une desdites faces transversales à souder présente localement, une saillie axiale telle qu'une pointe pour contact local avant soudage avec l'autre face transversale.

Ainsi le courant électrique, de grande intensité, provoqué par la décharge rapide du condensateur (par exemple de l'ordre de nano seconde) passera par la saillie qui s'échauffera et sera facilement écrasée axialement lors de la mise en contact sous pression des faces transversales à souder avec, en final, formation d'une soudure.

Il est réalisé, grâce à la saillie, un faible contact avant soudage entre lesdites faces transversales.

D'une manière générale, ce type de soudage ne nécessite pas d'apport de matière contrairement par exemple à un soudage par transparence, n'est pas limité par l'épaisseur des pièces à souder, est simple à réaliser et fait appel à deux interrupteurs pour respectivement charger et décharger les condensateurs.

Les faces transversales à souder peuvent être du type acier-acier ou acier-fonte, compte tenu que le roulement est usuellement en acier.

On peut donc souder des pièces en fonte ou en acier sur le roulement.

Il devient alors possible d'envisager d'autres développements.

En effet, pour formation d'un limiteur de couple, la deuxième masse peut être en deux parties, à savoir un plateau de réaction proprement dit monté sur un moyeu. Le moyeu peut être en acier de la qualité d'un acier à roulement. Dans ce cas, on peut souder la bague externe du roulement sur le moyeu.

En variante, le moyeu peut être conformé pour former la bague externe du roulement.

Cette solution est, dans cette application, économique car elle évite d'avoir à traiter le moyeu.

Après on soude la bague interne du roulement sur la première masse pour obtenir une solution compacte radialement et encore plus compacte axialement.

La description qui va suivre illustre l'invention en regard des dessins annexés dans lesquels :
- la figure 1 est une vue en coupe axiale selon la ligne 1-1 de la figure 2 ;
- la figure 2 est une vue selon la flèche 2 de la figure 1 sans la deuxième masse et la coupelle avec sa pièce supplémentaire ;

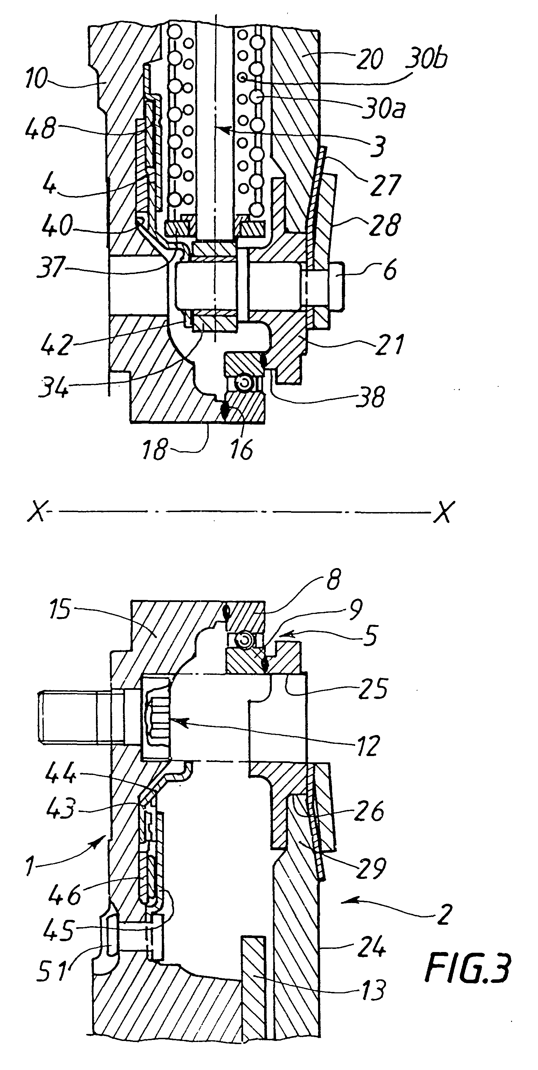

- la figure 3 est une vue à plus grande échelle de la partie centrale de la figure 1 ;
- la figure 4 est une vue montrant le soudage de la bague externe du roulement centralement à un moyeu de la deuxième masse formant la partie interne de celle-ci avec, en pointillés, un dispositif de frottement optionnel ;

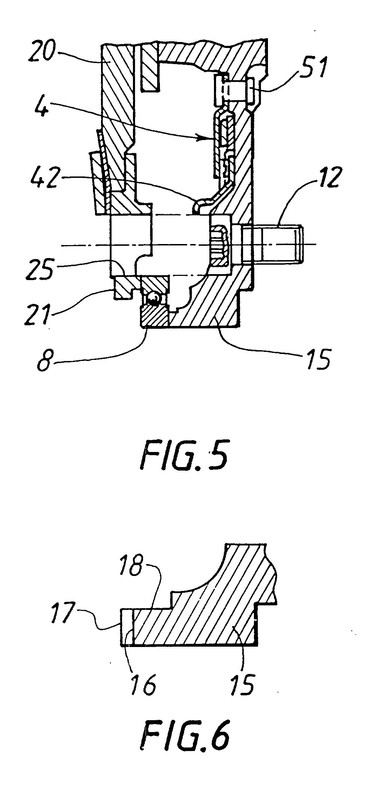

- la figure 5 est une vue montrant le soudage final de la bague interne du roulement à une surépaisseur centrale de la première masse ;
- la figure 6 est une vue partielle de la surépaisseur de la première masse montrant la saillie de celle-ci ;

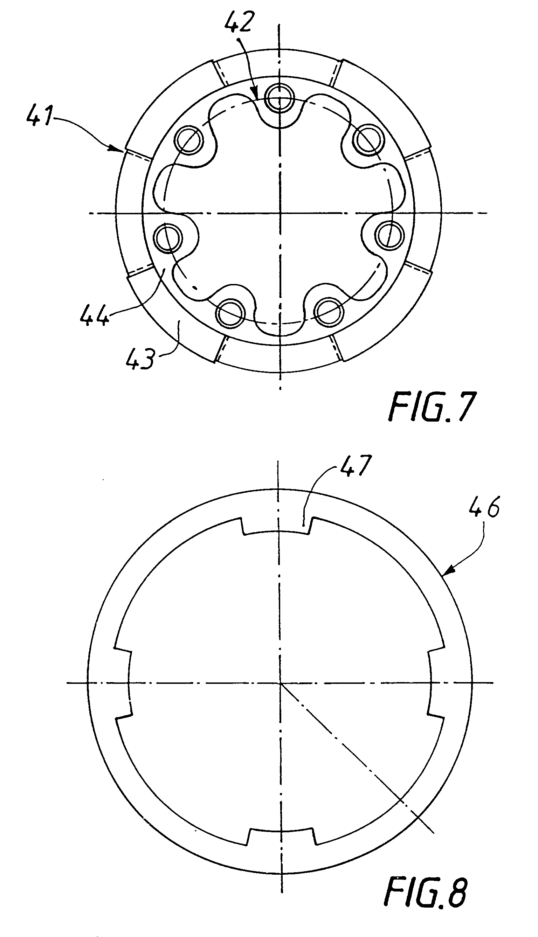

- la figure 7 est une vue de face de la rondelle de commande du dispositif de frottement adjacent à la première masse ;

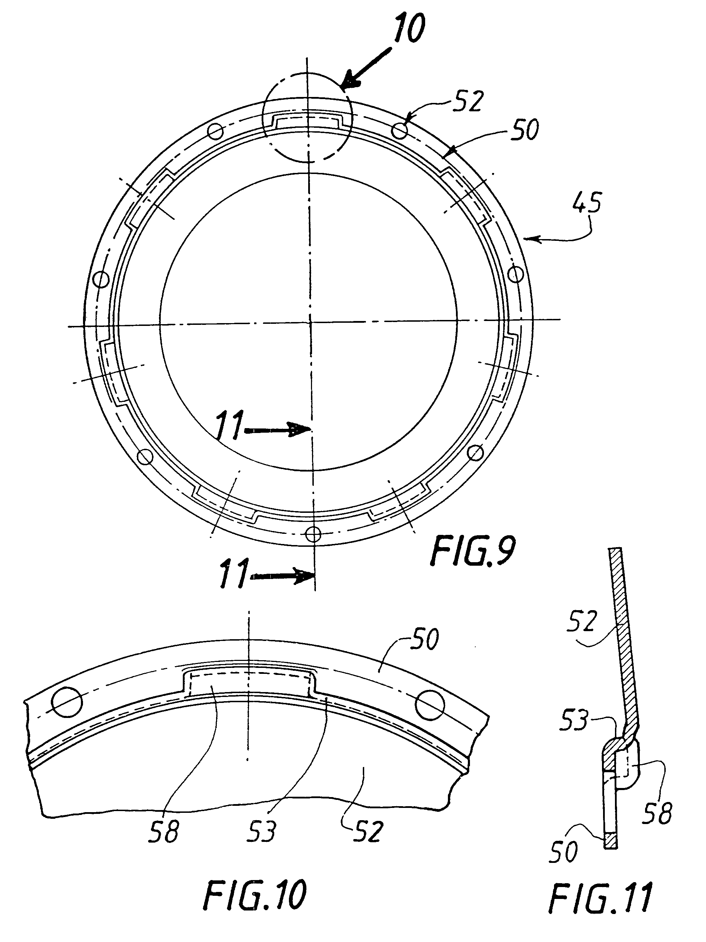

- la figure 8 est une vue de face de la rondelle de frottement dudit dispositif de frottement ;
- la figure 9 est une vue de face de la rondelle de fermeture dudit dispositif ;
- la figure 10 est une vue selon l'encart 10 de la figure 9 ;
- la figure 11 est une vue en coupe selon la ligne 11-11 de la figure 9 ;

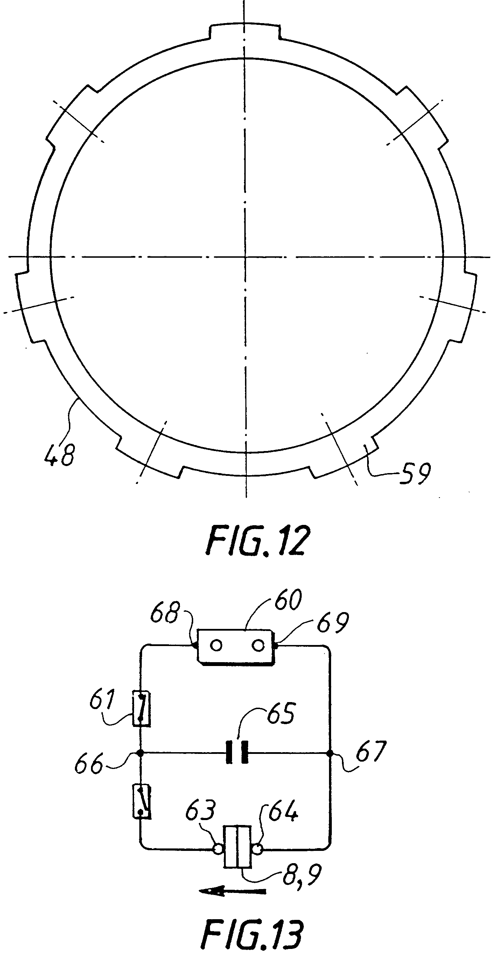

- la figure 12 est une vue de face de la rondelle Belleville dudit dispositif de frottement ;
- la figure 13 est une vue schématique du circuit électrique permettant le soudage.

Dans les figures on a représenté un double-volant amortisseur de torsion pour véhicule automobile.

Ainsi qu'on le sait, dans un véhicule automobile un embrayage à friction est monté dans la chaîne cinématique allant du vilebrequin du moteur à l'arbre d'entrée de la transmission.

L'embrayage forme un organe de coupure et de démarrage. Il comporte usuellement un ensemble de pièces annulaires, à savoir un couvercle, un diaphragme prenant appui sur le couvercle, un plateau de pression soumis à l'action du diaphragme et lié en rotation - avec mobilité axiale - au couvercle, le plus souvent par des languettes élastiques, un disque de friction présentant à sa périphérie externe des garnitures des frottement et un plateau de réaction.

Normalement l'embrayage est engagé car le diaphragme sollicite le plateau de pression en direction du plateau de réaction pour serrage des garnitures de frottement du disque de friction entre lesdits plateaux de pression et de réaction.

Ainsi, le couple est transmis de l'arbre menant (le vilebrequin du moteur) à l'arbre mené (l'arbre d'entrée de la transmission) car le disque de friction présente un moyeu calé en rotation par des cannelures sur l'arbre d'entrée de la transmission, le plus souvent une boîte de vitesses.

Pour débrayer l'embrayage, on agit à l'aide d'une butée de débrayage sur l'extrémité interne des doigts du diaphragme - en poussant ou en tirant suivant le type d'embrayage - pour annuler la charge qu'exerce le diaphragme sur le plateau de pression.

Ainsi, dans un embrayage à friction, le plateau de réaction est lié de manière débrayable à un arbre mené et offre, pour ce faire, une face de friction à la garniture de frottement concernée du disque de friction.

Dans un embrayage classique, ce plateau de réaction forme un volant solidaire par des vis de fixation du vilebrequin du moteur.

Pour mieux filtrer les vibrations, on a proposé de diviser le volant en deux parties, l'une comportant le plateau de réaction, l'autre une masse primaire destinée à être fixée à un arbre menant, à savoir le vilebrequin du moteur dans le cas d'une application à un véhicule automobile.

Le plateau de réaction appartient à une seconde masse montée tourillonnante sur la première masse par l'intermédiaire de moyens de palier, le plus souvent sous la forme d'un roulement à billes.

La filtration des vibrations est réalisée à l'aide de moyens élastiques d'amortissement et de moyens de frottement intervenant entre les deux masses.

Lesdits moyens élastiques constituent des moyens d'accouplement intervenant entre les deux masses.

Les moyens élastiques d'amortissement peuvent être implantés et agir circonférentiellement entre les deux masses.

Dans ce cas, par exemple la première masse présente des appuis en vis-à-vis pour les extrémités circonférentielles des moyens élastiques d'amortissement, classiquement sous la forme de ressorts à boudins. Ces appuis sont portés respectivement par un plateau de la première masse et un disque solidaire dudit plateau.

Un disque secondaire solidaire de la seconde masse pénètre entre le plateau et le disque de la première masse pour agir par des bras également sur les extrémités circonférentielles des ressort à boudins.

En variante, les moyens élastiques d'amortissement peuvent être implantés et agir globalement radialement entre les deux masses.

Les moyens de frottement sont usuellement à action axiale et comportent au moins une rondelle de frottement soumise à l'action de moyens élastiques à action axiale.

Un tel dispositif est appelé double-volant amortisseur de torsion. En variante les moyens de frottement peuvent être à action radiale lorsque les moyens d'accouplement sont du type centrifuge.

Dans les figures, le double-volant comporte deux masses tournantes coaxiales 1,2 montées mobiles en rotation l'une par rapport à l'autre, autour d'un axe commun de symétrie axiale X-X, à l'encontre de moyens élastiques d'amortissement 3 et de moyens de frottement 4 à action axiale.

La seconde masse 2 est montée tournante sur la première masse 1 à l'aide de moyens de palier 5, ici un roulement à billes 5, intervenant centralement entre les deux masses 1,2, c'est-à-dire au niveau de la périphérie interne de chaque masse.

Le roulement à billes 5 est ici du type standard et comporte des billes interposées radialement une bague interne 8 et une bague externe 9 massives et concentriques.

La seconde masse 2 est ici en deux parties concentriques 20,21.

L'une des parties, à savoir la partie radialement la plus externe 20, constitue le plateau de réaction précité de l'embrayage à friction, tandis que l'autre partie 21 constitue un moyeu central pour la première partie montée tournante sur ledit moyeu 21 de manière décrite ci-après.

Le roulement 5 intervient entre la périphérie interne du moyeu 21 de la seconde masse 2 et la partie centrale (la périphérie interne) de la première masse 1.

La première masse 1 comporte également un plateau 10. Les plateaux 10, 20 sont, d'une part, en matière moulable, ici en fonte pour augmenter les inerties et, d'autre part parallèle entre eux et étant décalés axialement l'un part rapport à l'autre.

En variante, le plateau 10 peut être à base d'aluminium.

Le plateau 10 porte, à sa périphérie externe, une couronne de démarreur 11 propre à être entraînée par le démarreur du véhicule.

Le plateau 20 présente, à sa périphérie externe, un rebord annulaire 22 pour fixation du couvercle (non visible) de l'embrayage.

On a représenté ici, en 23, l'une des vis de fixation du couvercle et, en 24, la face de friction qu'offre le plateau de réaction 20 à la garniture de frottement concernée du disque de friction.

Le moyeu 21 présente, radialement au-dessus du roulement à billes 5, des passages 25 permettant à l'aide d'au moins un outil un accès aux têtes des vis de fixation 12 de la première masse 1 au vilebrequin du moteur. Le filetage des vis 12 traverse des trous (non référencés) pratiqués au voisinage de la partie centrale du plateau 10 en coïncidence axial avec les passages 25. Les têtes des vis 12 prennent appui sur le plateau 10 et présentent chacune une empreinte pour un outil associé traversant un passage 25 de la seconde masse 2 et permettant le vissage des vis 12.

Le moyeu 21 présente, à sa périphérie externe, une gorge 26 ouverte vers l'extérieur en direction opposée à la masse 1. Le moyeu 21 comporte donc, à sa périphérie externe, d'une part, une collerette saillante radialement et formant le flanc de la gorge 26 et, d'autre part, un fond formant une portée cylindrique de centrage d'orientation axiale. La gorge 26 est fermée vers l'extérieur par une rondelle d'application 27 métallique reconstituant l'autre flanc de la gorge 26. Cette rondelle d'application 27 est soumise à l'action d'une rondelle élastique 28 d'action axiale. Le plateau de réaction 20 est d'épaisseur réduite à sa périphérie interne et présente ainsi un voile interne 29 engagé dans la gorge 26 fermée par la rondelle 27.

L'alésage interne du voile 29 est centré par le fond de la gorge 26, tandis que la face interne du voile 29 est en contact avec la collerette du moyeu 21 et la face externe du voile 29 en contact avec la rondelle d'application 27. Cette face externe, tournée à l'opposé du plateau 10 est inclinée, de même que la périphérie externe de la rondelle 27, qui est en contact avec ladite face externe sous l'action de la rondelle élastique 28 qui est aussi inclinée à sa périphérie externe.

Cette rondelle 28 est du type Belleville.

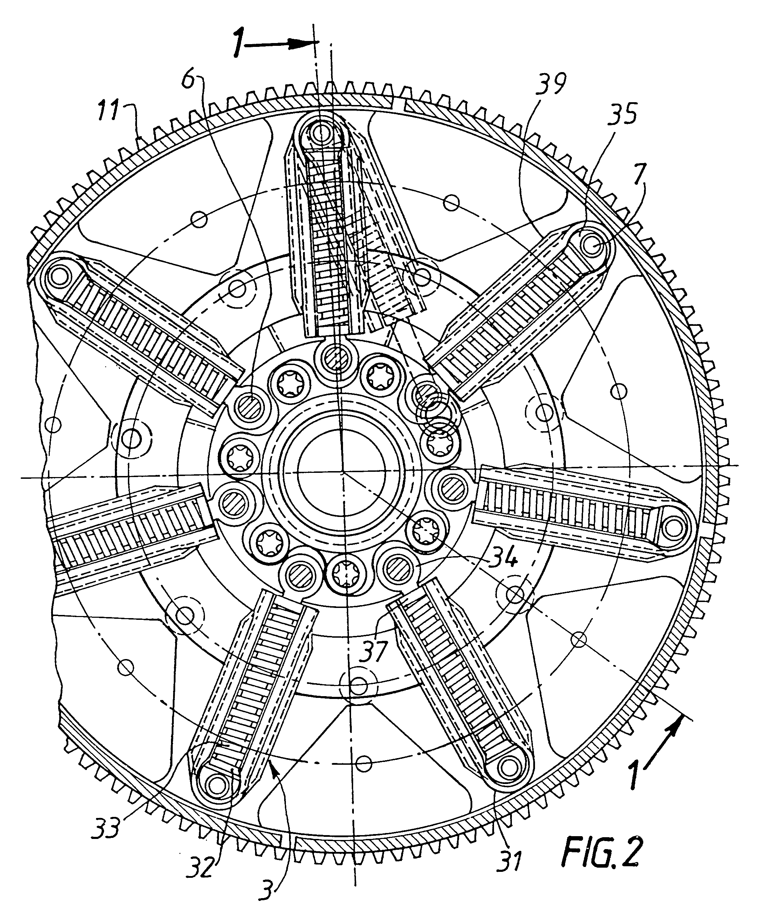

Les rondelles 27,28 présentent, à leur périphérie interne, une portion transversale par l'intermédiaire de laquelle elles sont fixées au moyeu 21 à l'aide d'organes de fixation 6 traversant lesdites rondelles. Ces organes 6 sont implantés sur une circonférence médiane de diamètre voisin, ici légèrement supérieur, de celui des passages 25, comme visible à la figure 2.

Les organes 6 alternent circonférentiellement avec les passages circulaires 25, ici de diamètre supérieur à celui des têtes des vis 12.

Il est ainsi formé un limiteur de couple qui, en cas de surcouple, de manière connue, permet une rotation relative entre le plateau 20 et le moyeu 21 pour notamment protéger les moyens élastiques d'amortissement 3.

Bien entendu, le voile 29 est traité pour lui donner la dureté nécessaire ainsi que le fond de centrage et la collerette du moyeu 21.

Les moyens élastiques 3 comportent ici une pluralité de cassettes 3 élastiques réparties régulièrement circonférentiellement (figure 2). Les cassettes 3 interviennent globalement radialement entre les deux masses 1, 2 et sont disposées globalement axialement entre les plateaux 10, 20.

Chaque cassette 3 renferme au moins un ressort hélicoïdal 30a à l'intérieur d'un boîtier 31. Un piston 32 à tige 33 se déplace à l'intérieur du boîtier 31. La tige 33 présente, à son extrémité libre (à l'extérieur du boîtier 31), une pièce d'articulation, dite seconde pièce d'articulation 34.

Le boîtier 31 porte, à sa périphérie externe, une pièce d'articulation 35, dite première pièce d'articulation, interposée entre le sommet du boîtier 31 et le piston 32 en forme de rondelle. Ici deux ressorts à boudin concentriques 30a, 30b sont prévus par cassette 3.

La première pièce d'articulation 35 forme une portion de rotule immobilisée par la forme du boîtier 31, qui ici est constitué à partir d'une tôle pliée en épingle à cheveux autour de la rotule 35 avec formation de nervures longitudinales 39. Les ressorts 30a, 30b prennent appui sur le piston 32 solidaire par soudage de la tige 33 et sur une butée 37 traversée par la tige et fixée à l'extrémité libre du boîtier 31, ici par soudage.

Ainsi, après traversée de la butée 37 par la tige 33 et montage des ressorts 30a, 30b, on soude la tige 33 au piston 32 et, enfin, la butée 37 au boîtier 31.

Les pièces d'articulation 34,35 sont chacune munies d'un alésage cylindrique formant palier de rotation.

Un tourillon 6 riveté à la seconde masse est engagé dans l'alésage interne de la seconde pièce d'articulation 34.

De même un tourillon 7, solidaire de la première masse 1, est engagé dans l'alésage interne de la première pièce d'articulation 35.

Ici des paliers lisses anti-frictions (non référencés) sont interposés entre les tourillons 6,7 et les alésages internes des secondes 34 et premières 35 pièces d'articulation.

En variante on peut remplacer lesdits paliers par des roulements à aiguilles.

Ici les tourillons 7 sont engagés chacun à force à une de leurs extrémités axiales dans un trou non référencé, pratiqué à la périphérie externe du plateau 10 et, à leur autre extrémité, dans un trou d'une pièce métallique de fermeture en tôle 13 en forme de coupelle ouverte centralement.

Il est formé ainsi, grâce au plateau 10 et à la pièce de fermeture 13, une chape pour le montage des tourillons 7.

Cette chape permet également de positionner axialement les boîtiers 31.

La pièce 13 est fixée par des vis 14 au plateau 10 dans des zones épaisses en dehors des cassettes 3.

Le plateau 10 présente ainsi des dégagements triangulaires pour les cassettes 3 (figure 2).

On appréciera que la pièce de fermeture 13 rigidifie le plateau 10 et qu'elle porte à fixation, ici par soudage, une pièce supplémentaire 55 s'étendant radialement au-dessus du rebord 22 pour augmentation de l'inertie de la première masse.

Ici les tourillons 6 forment les organes de fixation précités des rondelles 27,28 du limiteur de couple au moyeu 21.

Ainsi les cassettes 3 sont montées à articulation à la périphérie externe de la première masse 1 sur les tourillons 7 et à articulation à la périphérie interne de la seconde masse 2, ici sur le moyeu 21, par l'intermédiaire des tourillons 6.

La tige 33 traverse la butée 37 en forme de rondelle avec intervention d'un palier antifriction non référencé.

Les ressorts 30a, 30b prennent appui sur le piston 32 et la butée 37 solidaire du boîtier 31, en sorte qu'ils travaillent en compression.

Au repos, les tourillons 6,7 sont radialement alignés.

Bien entendu, en variante les tourillons 6,7 peuvent être légèrement décalés circonférentiellement lorsque les deux masses 1,2 sont au repos.

Les ressorts 30a, 30b travaillent donc globalement radialement en compression.

Lors d'un mouvement relatif entre les deux masses, les cassettes 3 s'inclinent, comme visible pour l'une d'elles en pointillés à la figure 2.

Il en résulte un déplacement du piston 32 dans le boîtier 31 et une compression des ressorts 30a, 30b.

On notera que les tourillons 6 présentent une collerette au contact de la face interne du moyeu 21 tournée vers le plateau 10. Chaque tourillon 6 est délimité par ladite collerette prolongée par une partie cylindrique de plus petit diamètre traversant le moyeu 21 et se terminant par une queue de diamètre réduit traversant les rondelles 27, 28.

Ensuite on mate cette queue, en sorte que les rondelles 27,28 sont emprisonnées entre la face externe du moyeu 21 et la partie sertie de la queue du tourillon 6.

Les cassettes 3 ont donc une grande longueur.

Dans le but, notamment, d'allonger encore la distance radiale entre les tourillons 6, 7 et de simplifier au moins l'une des masses 1, 2, il est proposé, suivant une caractéristique de l'invention, de fixer par soudage directement l'une au moins des bagues du roulement 5 à sa masse 1,2 concernée.

Ce soudage intervient entre l'une des faces transversales de la bague concernée du roulement 5 et un épaulement transversal en vis-à-vis de la masse 1, 2 concernée.

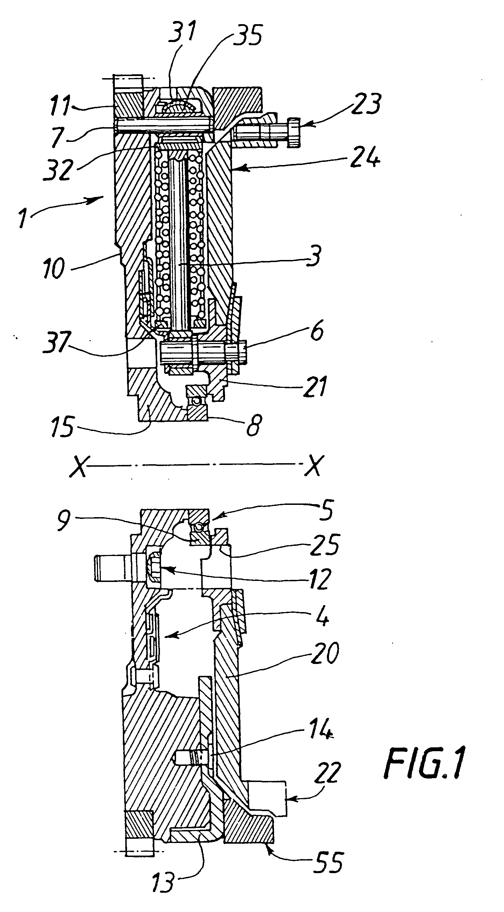

Dans les figures 1, le plateau 10 de la masse 1 présente, radialement en dessous des vis 12, une surépaisseur 15 formant la partie centrale (la périphérie interne) du plateau 10.

Cette surépaisseur 15, saillante axialement sur une faible longueur, présente une face d'extrémité transversale 16. C'est cette face transversale 16 qui est fixée à la face transversale en regard de la bague intérieure 8 du roulement 5.

La bague intérieure 8, ici massive, ou la face transversale 16 présente localement une saillie axiale, par exemple une pointe, pour contact local avant soudage avec l'autre face transversale. Grâce à cette saillie on réduit la zone de contact entre les deux faces, ce qui favorise l'écrasement de la matière.

Le soudage est effectué par décharge d'un condensateur et application d'une pression entre la bague interne 8 et la surépaisseur 15. On effectue un déplacement axial relatif de la bague interne 8 par rapport à la face transversale en appliquant une forte pression.

Le courant, de forte intensité, provoqué par la décharge rapide du condensateur, traversera la saillie qui, en combinaison avec la pression exercée, s'échauffera et s'écrasera rapidement pour, après décharge du condensateur, donner lieu à un soudage de la bague 8 sans apport de matière.

Bien entendu on introduit, à l'intérieur de l'alésage interne cylindrique de la surépaisseur, un centreur pour centrer la bague interne du roulement 5 lors du soudage sous pression, mettant en contact les deux faces transversales à souder.

De préférence, la saillie 17 est formée sur la face transversale 16 de la surépaisseur 15. La face transversale 16 est de hauteur moindre que la hauteur de la bague intérieure 8 du roulement. La face transversale 16 forme l'extrémité libre d'une collerette 18, d'orientation axiale, que présente en bout la surépaisseur 15.

On voit que, par rapport à l'art antérieur, l'on supprime l'appendice axial porté par la première masse et entouré par la bague interne du roulement à billes. Il n'y a pas besoin de butée pour caler d'autre face de la bague 8.

Axialement et radialement, on gagne donc de la place, ce qui permet d'augmenter légèrement l'épaisseur de la bague interne 8 du roulement 5, et donc de rendre celle-ci plus robuste, tout en étant moins encombrant radialement. Le soudage sous pression permet également de bien positionner la bague intérieure du roulement par rapport au vilebrequin du moteur du fait que ladite bague est en contact direct avec la première masse et que l'on écrase la matière.

Ici on soude également la bague externe 9 du roulement 5 à la deuxième masse en sorte que le roulement à billes 5 forme une entretoise axiale entre les deux masses.

Plus précisément, on soude la bague 9 au moyeu 21, du limiteur de couple, qui est ici traité pour présenter la dureté voulue.

Cela est rendu possible grâce au fait que le soudage par décharge du condensateur permet de souder une pièce en acier sur de la fonte ou une pièce en acier sur de l'acier. Le moyeu 21 est donc d'un coût réduit car il ne présente pas d'alésage interne pour logement de la bague externe 9 du roulement 5. On réduit donc la consommation de matière et les usinages.

La suppression de l'alésage interne permet de réduire également la taille radiale ainsi que la taille axiale au centre du double-volant, car il n'y a pas besoin de butée, tel qu'un circlips, pour caler axialement la face de la bague externe 9 tournée vers le plateau 10.

Le moyeu 21 présente une collerette d'orientation axiale 38, d'épaisseur moindre que la hauteur de la bague extérieure du roulement. La collerette 38 est issue de la face du moyeu 21 s'étendant vers le plateau 10 de la première masse 1. Elle s'étend axialement sur une faible longueur et présente à son extrémité libre, la face transversale destinée selon l'invention à être liée par soudage à la face transversale en vis-à-vis de la bague externe 9 du roulement 5.

De préférence on soude d'abord, sous pression, la bague externe 9 du roulement 5 au moyeu 21, puis on soude, sous pression, la bague intérieure 8 du roulement 5 à la face 16.

Bien entendu, la face transversale de la collerette 38 du moyeu 21 ou la face transversale en regard de la bague 9 présente une saillie axiale avant soudage destinée à être écrasée et chauffée lors du soudage par décharge du condensateur.

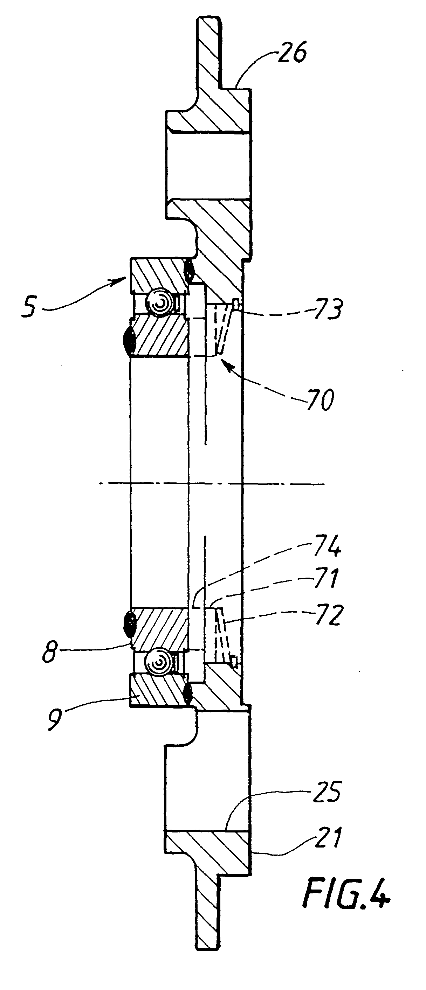

En variante on peut profiter, si besoin est, pour implanter un dispositif de frottement 70 (figure 4 en pointillés) entre l'autre face transversale de la bague soudée et l'autre masse.

Par exemple, un dispositif de frottement peut intervenir entre la protubérance 15 et la face transversale de la bague externe.

Avantageusement, ce dispositif de frottement intervient entre le moyeu 21 et la bague intérieure 8 épaissie.

Le moyeu 21 présente, par exemple à sa périphérie interne, au moins une saillie axiale en forme de nervure non référencée.

Le dispositif de frottement comprend une rondelle d'application 71 comportant, à sa périphérie externe, une encoche de forme complémentaire à la nervure du moyeu pour liaison en rotation - avec mobilité axiale - de la rondelle d'application avec le moyeu 21.

De préférence au moins deux saillies réparties à 90° et deux encoches complémentaires sont prévues et on peut inverser les structures, le moyeu présentant par exemple les encoches.

La rondelle d'application 71 est soumise à l'action d'une rondelle élastique à action axiale 72 prenant appui sur une butée 73 solidaire axialement du moyeu 21, tel qu'un circlips engagé dans une gorge du moyeu.

Une rondelle de frottement 74 est alors intercalée axialement entre la rondelle d'application et la bague interne 8. Cette rondelle de frottement est par exemple collée ou rivetée sur la rondelle d'application. La rondelle élastique 72 sollicite la rondelle d'application vers la bague 8 pour serrage de la rondelle de frottement 74 entre la rondelle d'application 71 et la face transversale de la bague interne 8.

On appréciera que la surépaisseur 15 est relativement massive, en sorte que la première masse est centralement robuste.

Grâce à l'invention, pour un encombrement axial donné au centre du double-volant, on peut diminuer l'encombrement radial au centre tout en augmentant l'épaisseur de la bague intérieure massive 8 du roulement à bille 5 du type standard, pour accroître la robustesse du roulement 5 et former une face de frottement pour le dispositif de frottement 70 précité.

Ici les moyens de frottement 4 sont implantés en majeure partie au-dessus des tourillons 6. Ces moyens sont implantés au voisinage du plateau 10 offrant ici une face de friction 41 pour lesdits moyens 4, qui sont ainsi éloignés du plateau de réaction 10 et donc ménagés.

Les moyens 4 comportent une rondelle de commande 41 liée en rotation au tourillon 6.

La rondelle 41 présente, à sa périphérie interne, une partie en équerre avec des pattes radiales trouées 42 d'orientation transversale et, à sa périphérie externe, des ondulations 43.

Les pattes 42 alternent circonférentiellement avec les vis 12 en sorte que la rondelle 41 est, au niveau des vis 12, implantée radialement au-dessus des vis 12 et présente des dégagements pour celles-ci.

Une partie inclinée 44 relie entre elles les parties périphériques 43, 42.

Les tourillons 6 traversent les trous des pattes 42, en sorte que la rondelle 41 est liée en rotation -avec mobilité axiale, aux tourillons 6.

La partie inclinée 44 permet de créer le décalage axial voulu entre les parties périphériques 42, 43 et d'éviter toute interférence avec les vis 12.

La partie périphérique 43 est admise par ses ondulations à frotter, d'une part; sur la face 40 du plateau 10 tournée vers les cassettes 3 et le plateau de réaction 20 et, d'autre part, sur une pièce de forme creuse, en forme de couvercle, dite rondelle de fermeture 45.

Radialement, au-dessus de la rondelle de commande 41, est montée une rondelle de frottement 46 présentant, à sa périphérie interne épaissie, des pattes 47.

La rondelle 46 est avantageusement en matière synthétique et est soumise à l'action d'une rondelle élastique à action axiale 48, ici une rondelle Belleville, prenant appui sur la rondelle de fermeture pour solliciter la rondelle de frottement 46 au contact de la face 40 du plateau 10.

La rondelle Belleville 48 est solidaire en rotation de la rondelle de fermeture 45 présentant, à sa périphérie externe, un rebord globalement d'orientation transversale 50 dirigé radialement vers l'extérieur. Ce rebord 50 est doté, de place en place, de trous non référencés pour fixation de la rondelle 45, à l'aide de rivets 51, au plateau 10.

Le rebord radial 50 se raccorde au fond 52 par une zone annulaire d'orientation axiale 53. Le fond 52, troué centralement, est incliné en direction du plateau 10. Il existe donc une distance axiale plus importante entre la périphérie externe 45 du fond 52 et la face 40 du plateau 10, qu'entre la périphérie interne du fond 52 et ladite face 40.

La distance axiale entre deux sommets opposés des ondulations de la rondelle de commande 40, ici métallique, est supérieure à la distance axiale entre la périphérie interne du fond 52 et la face 40.

La rondelle de fermeture 45 sollicite donc la rondelle de commande 41 au contact, par sa périphérie externe 43, de la face 40 du plateau. La rondelle 41 est donc pincée élastiquement entre la face 40 et la périphérie interne de la rondelle de fermeture 45.

Les moyens de frottement à action axiale 4 s'étendent ici radialement au-dessus des têts des vis 12 en étant portés en majeure partie par la première masse 1.

On notera que la partie inclinée 44 se raccorde à une partie d'orientation axiale (non référencée) que présente la rondelle 41 à sa périphérie interne.

Les moyens de frottement 4 sont compacts axialement et comportent un nombre de pièces réduit du fait, notamment, que la rondelle de commande 41, par sa périphérie externe ondulée, vient alternativement en contact avec la face 40 et la rondelle 45.

La rondelle de fermeture 45 permet également de supprimer une pièces puisqu'elle est déformée par la rondelle de commande 41 et exerce une action de serrage sur celle-ci.

On économise ainsi la présence d'une rondelle élastique.

Cette rondelle de fermeture 45 est emboutie localement. Ces emboutis 58 affectent localement le rebord 50, la zone 53 et la périphérie externe du fond 52.

Les emboutis 58 alternent circonférentiellement avec les trous de passage des rivets 51 de fixation de la rondelle 45 au plateau 10.

La rondelle Belleville 48 comporte, à sa périphérie externe, des pattes radiales inclinées 59 qui rentrent dans le creux des emboutis 58. La rondelle 48 est donc liée à rotation à la rondelle de fermeture, ici sans jeu circonférentiel et appuie directement sur la rondelle de frottement 46, constituant ainsi également une rondelle d'application au bénéfice d'une réduction du nombre de pièces.

Cette rondelle de frottement 46 engrène, par ses pattes internes 47, avec les ondulations de la partie externe 43 de la rondelle 41.

Cela est réalisé aisément à la faveur des ondulations.

Les ondulations forment donc, naturellement, des moyens d'entraînement pour la rondelle 46, entourant avec sa rondelle 48 associée la rondelle de commande 41. Les sommets des ondulations forment des surfaces actives de frottement.

Les pattes 47 pénètrent ici à jeu circonférentiel dans les creux délimités par les ondulations.

Après annulation du jeu, la rondelle 46 est entraînée en rotation par la rondelle 41 et frotte contre la face 40 et la rondelle 48. La rondelle 41 frotte ici en permanence contre la face 40 et la rondelle 45. Ainsi on filtre bien les vibrations.

En effet, la rondelle 41 est admise, par coopération avec la face 40 et la rondelle 45, à filtrer les vibrations dans le domaine du ralenti du moteur.

La rondelle de frottement 46, par coopération avec la face 40 et la rondelle 48, est admise à intervenir de manière étagée pour filtrer les vibrations dans le régime de marche du véhicule.

Les moyens de frottement 4, à rondelles de frottement concentriques 46, 41, sont économiques, simples, et font appel à un nombre réduit de pièces.

Bien entendu, la présente invention n'est pas limitée aux exemples de réalisation décrits.

Par exemple, les cassettes 3 peuvent être remplacées par des ressorts comportant, à chacune de leurs extrémités, une boucle pour montage sur les tourillons. Dans ce cas les ressorts radiaux travaillent en traction.

Les moyens élastiques d'amortissement 3 (et également d'accouplement) peuvent être à action circonférentielle de manière précitée.

En variante, ils peuvent être implantés à la périphérie externe du double-volant, comme décrit par exemple dans le document FR-A-2 662 760 précité.

Les moyens d'accouplement peuvent être du type centrifuge comme décrit dans le document FR-A-2 044 978.

Le soudage peut être du type Laser.

Néanmoins, le soudage par décharge d'un condensateur et sous pression est facile à réaliser.

Le circuit électrique comporte une source de tension 60, un premier et un second interrupteurs respectivement 61, 62, des points respectivement 63, 64 pour contact, par exemple, avec la première masse 1 et la bague interne 8 du roulement et un condensateur 65.

Le condensateur 65, la source 60 et les points 63, 64 sont montés en parallèle.

En désignant par 66 et 67 les bornes du condensateur et par 68 et 69 les bornes de la source, on voit que le premier interrupteur 61 est monté entre les points 66 et 68 et le deuxième interrupteur entre les points 66 et 63.

Lorsque l'interrupteur 61 est fermé et l'interrupteur 62 ouvert, le condensateur se charge. Lorsque l'interrupteur 61 est ensuite ouvert puis l'interrupteur 62 fermé, le condensateur se décharge et le courant passe par les points 63, 64, la collerette 18, 38 concernée et la bague interne 8 ou externe 9 concernée avec serrage des faces transversales associées concernées.

La collerette 18, 38 s'échauffe compte tenu de sa relative faible épaisseur, ainsi que la saillie associée qui s'échauffe encore plus. La matière de la saillie est écrasée. Tout cela est très rapide.

On notera que la constitution de la seconde masse 2 en deux parties 20, 21 permet de souder facilement la bague externe.

Bien entendu, la présence du limiteur de couple n'est pas indispensable, la seconde masse pouvant être d'un seul tenant en étant par exemple en fonte.

La première masse peut être en acier.

Pour exercer la pression on fait appel à un outil avec une partie fixe et une partie mobile axialement.

Par exemple, l'outil fixe peut servir d'appui à la face frontale, tournée à l'opposé de la seconde masse, du plateau 10 de la première masse.

Cet outil fixe comporte, avantageusement, un centreur venant par sa périphérie externe en contact intime de la périphérie interne de la surépaisseur 15 de la première masse. La bague interne 8 est alors engagée sur le centreur.

On voit que l'extrémité libre de l'arbre mené peut pénétrer à l'intérieur de l'alésage central délimité par la surépaisseur et la bague interne pour venir au plus près de la bague interne.

Pour souder la bague externe on peut procéder de la même manière, le centreur de l'outil fixe étant alors étagé.

On appréciera que ce mode de soudage sous pression permet de bien positionner les bagues respectivement par rapport à la face frontale du plateau 10 et du plateau 20 et de rattraper les tolérances de fabrications. En effet, on peut régler le mouvement de l'outil mobile.

Dans tous les cas le roulement, déjà ventilé grâce aux passages 25, est encore ventilé grâce au soudage, selon l'invention.

Bien entendu le roulement peut être à deux rangées de billes avec, par exemple, une bague externe d'un seul tenant et une bague interne divisée. Dans ce cas, on soude la bague externe à la deuxième masse 2, soit au moyeu de celle-ci, soit à la périphérie interne du plateau de réaction de celle-ci lorsque ladite masse est dépourvue de limiteur de couple.

La saillie portée par l'une des faces transversales à souder peut avoir une autre forme.

Elle peut être, par exemple, à profil arrondi. Ici on cherche à écraser la matière et donc initialement - avant soudage sous pression - un faible contact entre les deux faces transversales à souder.

On peut inverser les structures, la bague intérieure 8 pouvant être soudée à la partie centrale (la périphérie interne) de la seconde masse 2 et la bague extérieure 9 à la partie centrale (la périphérie interne) de la première masse 1.

Les vis 12 peuvent être implantées radialement en dessous du roulement 5.

On notera, lorsque l'on inverse les structures, que c'est l'autre face transversale de la bague du roulement qui est soudée.

Par exemple, la face transversale tournée vers la seconde masse 2, à l'opposé du plateau 10 de la première masse, sera alors soudée à la seconde masse 2.

Le limiteur de couple peut avoir une autre forme.

Bien entendu la deuxième masse peut être en une seule partie.

## Revendications

1. Double-volant, notamment double-volant amortisseur pour véhicule automobile, comportant deux masses tournantes (1,2) coaxiales montées mobiles en rotation l'une par rapport à l'autre autour d'un axe (X-X) commun de symétrie axiale avec intervention de moyens d'accouplement (3) entre les deux masses (1,2), dans lequel l'une des masses (1,2), dite première masse (1), est destinée à être liée en rotation à un arbre menant, tandis que l'autre masse (2), dite seconde masse (2), est destinée à être liée en rotation de manière débrayable à un arbre mené et comporte un plateau (20) formant le plateau de réaction (20) d'un embrayage à friction et dans lequel la seconde masse (2) est montée rotative sur la première masse (1) par l'intermédiaire d'un roulement à billes (5) intervenant entre les parties centrales des deux masses (1,2), **caractérisé en ce que** l'une au moins des bagues (8,9) du roulement à billes (5) est solidarisée par soudage à sa masse (1,2) associée, et en ce que le soudage intervient entre une face transversale (16,36) de ladite masse (1,2) et la face transversale en vis-à-vis de ladite bague (8,9) à souder.

2. Double-volant selon la revendication 1, **caractérisé en ce que** la face transversale (16,36) de la masse (1,2) a une hauteur inférieure à la hauteur de la face transversale en vis-à-vis de la bague (8,9) à souder.

3. Double-volant selon la revendication 2, **caractérisé en ce que** la face transversale (16,36) à souder de ladite masse appartient à l'extrémité libre d'une collerette (18,38) d'orientation axiale et d'épaisseur inférieure à la hauteur de la face transversale à souder de la bague (8,9) du roulement (5).

4. Double-volant selon l'une quelconque des revendications 1 à 3, **caractérisé en ce que** l'une des faces transversales à souder présente localement une saillie axiale (17) telle qu'une pointe pour faible contact avec sa face transversale associée avant soudage.

5. Double-volant selon l'une quelconque des revendications 1 à 4, **caractérisé en ce que** un dispositif de frottement (70) à action axiale intervient entre l'autre face transversale de ladite bague soudée (8,9) et l'autre masse (1,2) sur laquelle n'est pas soudée ladite bague.

6. Double-volant selon l'une quelconque des revendications précédentes, **caractérisé en ce que** les deux bagues (8,9) du roulement (5) sont soudées à la partie centrale respectivement de la première (1) et de la seconde masse (2).

7. Double-volant amortisseur selon la revendication 6, dans lequel les moyens d'accouplement (3) consistent en des moyens élastiques d'amortissement globalement à action radiale, **caractérisé en ce qu**'il comporte une seconde masse (2) en deux parties, à savoir une partie externe (20) formant le plateau de réaction de l'embrayage à friction et montée tournant sur un moyeu central (21), et en ce que la bague externe (9) du roulement (5) est soudée sur le moyeu (21) de la seconde masse (2).

8. Double volant selon la revendication 7, **caractérisé en ce que** les moyens élastiques d'amortissement (3) comportent des cassettes (3), d'une part montées à articulation par des premiers tourillons (7) à la périphérie externe de la première masse (1) et, d'autre part, montées à articulation par des seconds tourillons (6) à la périphérie interne de la seconde masse (2) sur le moyeu (21) de celle-ci.

9. Double-volant selon l'une quelconque des revendications, **caractérisé en ce que** le soudage est réalisé par décharge d'un condensateur (65) et mise en contact sous pression des faces transversales à souder.

## Patentansprüche

1. Zweimassenschwungrad, insbesondere Zweimassen-Dämpfungsschwungrad für Kraftfahrzeuge, das zwei rotierende koaxiale Schwungmassen (1, 2) umfaßt, die im Verhältnis zueinander drehbeweglich um eine gemeinsame axiale Symmetrieachse (X-X) unter Einfügung von Verbindungsmitteln (3) zwischen den beiden Schwungmassen (1, 2) gelagert sind, wobei eine der Schwungmassen (1, 2), die als erste Schwungmasse (1) bezeichnet wird, für die drehfeste Verbindung mit einer treibenden Welle bestimmt ist, während die andere Schwungmasse (2), die als zweite Schwungmasse (2) bezeichnet wird, dazu bestimmt ist, ausrückbar drehfest mit einer getriebenen Welle verbunden zu werden, und eine Platte (20) umfaßt, die die Gegenanpreßplatte (20) einer Reibungskupplung bildet, und wobei die zweite Schwungmasse (2) drehbar an der ersten Schwungmasse (1) über ein Kugellager (5) gelagert ist, das zwischen den mittleren Teilen der beiden Schwungmassen (1, 2) zum Einsatz kommt,
**dadurch gekennzeichnet,**
daß wenigstens einer der Ringe (8, 9) des Kugellagers (5) durch Schweißen fest mit seiner zugehörigen Schwungmasse (1, 2) verbunden ist und daß die Verschweißung zwischen einer Querfläche (16, 36) der Schwungmasse (1, 2) und der gegenüberliegenden Querfläche des zu verschweißenden Rings (8, 9) erfolgt.

2. Zweimassenschwungrad nach Anspruch 1, **dadurch gekennzeichnet**, daß die Querfläche (16, 36) der Schwungmasse (1, 2) eine Höhe hat, die kleiner als die Höhe der gegenüberliegenden Querfläche des zu verschweißenden Rings (8, 9) ist.

3. Zweimassenschwungrad nach Anspruch 2, **dadurch gekennzeichnet**, daß die zu verschweissende Querfläche (16, 36) der besagten Schwungmasse zum freien Ende eines axial ausgerichteten Kragens (18, 38) gehört, dessen Dicke kleiner als die Höhe der zu verschweißenden Querfläche des Rings (8, 9) des Kugellagers (5) ist.

4. Zweimassenschwungrad nach einem der Ansprüche 1 bis 3, **dadurch gekennzeichnet**, daß eine der zu verschweißenden Querflächen örtlich einen axialen Vorsprung (17), insbesondere eine Spitze, für einen schwachen Kontakt mit ihrer zugehörigen Querfläche vor dem Schweißen aufweist.

5. Zweimassenschwungrad nach einem der Ansprüche 1 bis 4, **dadurch gekennzeichnet**, daß eine axial wirksame Reibvorrichtung (70) zwischen der anderen Querfläche des verschweißten Rings (8, 9) und der anderen Schwungmasse (1, 2) zum Einsatz kommt, an der der besagte Ring nicht verschweißt ist.

6. Zweimassenschwungrad nach einem der vorangehenden Ansprüche, **dadurch gekennzeichnet**, daß die beiden Ringe (8, 9) des Kugellagers (5) am mittleren Teil der ersten (1) bzw. der zweiten Schwungmasse (2) verschweißt sind.

7. Zweimassenschwungrad nach Anspruch 6, wobei die Verbindungsmittel (3) aus im wesentlichen radial wirksamen elastischen Dämpfungsmitteln bestehen, **dadurch gekennzeichnet**, daß es eine zweiteilige zweite Schwungmasse (2) umfaßt, und zwar mit einem äußeren Teil (20), der die Gegenanpreßplatte der Reibungskupplung bildet und drehbar an einer mittigen Nabe (21) gelagert ist, und daß der Außenring (9) des Kugellagers (5) an der Nabe (21) der zweiten Schwungmasse (2) verschweißt ist.

8. Zweimassenschwungrad nach Anspruch 7, **dadurch gekennzeichnet**, daß die elastischen Dämpfungsmittel (3) Kassetten (3) umfassen, die einerseits durch erste Lagerzapfen (7) gelenkig am äußeren Umfang der ersten Schwungmasse (1) gelagert und andererseits durch zweite Lagerzapfen (6) gelenkig am inneren Umfang der zweiten Schwungmasse (2) an deren Nabe (21) gelagert sind.

9. Zweimassenschwungrad nach einem der vorangehenden Ansprüche, **dadurch gekennzeichnet,** daß das Schweißen durch Entladung eines Kondensators (65) und Zusammenpressen der zu verschweißenden Querflächen erfolgt.

## Claims

1. A dual flywheel, in particular a damping dual flywheel for a motor vehicle, comprising two coaxial rotating masses (1, 2) mounted for rotation of one with respect to the other about a common axis of axial symmetry (X-X), with coupling means (3) being operatively interposed between the two masses (1, 2), wherein one of the masses (1, 2), referred to as a first mass (1), is arranged to be coupled in rotation to a driving shaft, while the other mass (2), referred to as a second mass (2), is arranged to be coupled releasably in rotation to a driven shaft and comprises a plate (20) which is the reaction plate of a friction clutch, and wherein the second mass (2) is mounted rotatably on the first mass (1) through a ball bearing (5) interposed operatively between the central portions of the two masses (1, 2), **characterised in that** at least one of the rings (8, 9) of the ball bearing (5) is fastened by welding to its associated mass (1, 2), and in that the weld is interposed between a transverse face (16, 36) of the said mass (1, 2) and the opposing transverse face of the said welded ring (8, 9).

2. A dual flywheel according to Claim 1, **characterised in that** the transverse face (16, 36) of the mass (1, 2) has a height which is smaller than the height of the opposing transverse face of the welded ring (8, 9).

3. A dual flywheel according to Claim 2, **characterised in that** the welded transverse face (16, 36) of the said mass is part of the free end of an axially oriented collar portion (1, 38), the thickness of which is smaller than the height of the welded transverse face of the ring (8, 9) of the bearing (5).

4. A dual flywheel according to any one of Claims 1 to 3, **characterised in that** one of the welded transverse faces has a local axially projecting element (17), such as a point, for light contact with the transverse face associated therewith prior to the welding operation.

5. A dual flywheel according to any one of Claims 1 to 4, **characterised in that** an axially acting friction device (70) is operatively interposed between the other transverse face of the said welded ring (8, 9) and the other mass (1, 2) on which the said ring is not welded.

6. A dual flywheel according to any one of the preceding Claims, **characterised in that** the two rings (8, 9) of the bearing (5) are welded to the respective central portions of the first mass (1) and second mass (2).

7. A damping dual flywheel according to Claim 6, wherein the coupling means (3) consist of generally radially acting resilient damping means, **characterised in that** it includes a second mass (2) in two parts, comprising an outer part (20) which constitutes the reaction plate of the friction clutch and which is mounted for rotation on a central hub (21), and in that the outer ring (9) of the bearing (5) is welded on the hub (21) of the second mass (2).

8. A dual flywheel according to Claim 7, **characterised in that** the resilient damping means (3) comprise cassettes (3), which are, firstly, articulated by means of first pivot pins (7) at the outer periphery of the first mass (1), and, secondly, articulated by means of second pivot pins (6) at the inner periphery of the second mass (2), on the hub (21) of the latter.

9. A dual flywheel according to any one of the Claims, **characterised in that** the welding operation is carried out by discharge of a capacitor (65), with the transverse faces to be welded being put into contact with each other under pressure.
